# EUROPÄISCHE PATENTSCHRIFT

(11) **EP 3 310 454 B1**
(45) Veröffentlichungstag und Bekanntmachung des Hinweises auf die Patenterteilung: **13.01.2021**
(21) Anmeldenummer: 16721442.8
(22) Anmeldetag: 11.05.2016
(51) Int. Cl.: B01D 46/00, B01D 46/10, B01D 46/12

(54) **FILTERELEMENT MIT VORABSCHEIDER UND FILTERSYSTEM**
FILTER ELEMENT WITH PRE-SEPARATOR AND FILTER SYSTEM
ÉLÉMENT FILTRANT MUNI D'UN PRÉ-SÉPARATEUR ET SYSTÈME DE FILTRATION

(30) Priorität: 22.06.2015 DE 102015007901
(43) Veröffentlichungstag der Anmeldung: 25.04.2018
(73) Patentinhaber: MANN + HUMMEL GMBH, 71636 Ludwigsburg (DE)
(72) Erfinder: SCHMID, Daniel, 74343 Sachsenheim (DE); MAIER, Michael, 94419 Reisbach (DE)
(74) Vertreter: Seyboth, Matthias
(86) Internationale Anmeldenummer: PCT/EP2016/060518
(87) Internationale Veröffentlichungsnummer: WO 2016/206855

(56) Entgegenhaltungen:
- EP-A2- 2 639 428
- DE-A1-102010 005 114
- US-A- 5 730 770
- US-A1- 2013 298 773

## Beschreibung

### Technisches Gebiet

Die Erfindung betrifft ein Filterelement zum Filtern eines Fluids mit Vorabscheider, insbesondere zur Verwendung als Luftfilter einer Brennkraftmaschine oder als Innenraumluftfilter, insbesondere eines Kraftfahrzeugs.

### Stand der Technik

Aus dem Stand der Technik sind rechteckförmige Filterelemente, sog. Flachfilter, mit einem gefalteten Filtermedium, nämlich einem Faltenpack, bekannt. Diese Filterelemente werden zu Stabilisierungszwecken an den Stirnseiten und/oder Längsseiten, beispielsweise verklebt. Dennoch besteht die Gefahr, dass ein Filterelement im Gebrauch verbogen oder verwunden wird. Hierbei können sich Spalten und/oder Ritzen ausbilden. Dies kann zu erheblichen Leckagen führen.

Aus der DE 10 2009 041 134 A1 ist ein Filterelement bekannt, welches ein gefaltetes Filtermedium mit Stirnseiten und Längsseiten umfasst. Dabei weist das Filtermedium Falten mit Faltentälern und Faltenspitzen auf. Dem Filtermedium ist eine Befestigungseinrichtung mit Haftmitteln zugeordnet. Die Befestigungseinrichtung ist als in die Falten einsteckbares Profil ausgestaltet. Das einsteckbare Profil bewirkt eine Endfaltenstabilisierung, welche das Filterelement gegen Verwindungen und Deformierungen stabilisiert. Die Anordnung der Haftmittel am Profil bewirkt, dass das Filterelement im Bereich eines relativ steifen und stabilen Profils ergriffen werden kann, wenn es ausgetauscht werden soll. Auch hierdurch werden Deformierungen und Verwindungen des Filterelements vermieden. Insoweit schafft das Profil einen Soll-Angriffsbereich, den eine montierende Person anfassen soll, um das Filterelement zu lösen. Die Befestigungseinrichtung weist zwei Schenkel auf, wobei die Schenkel von der den Haftmitteln abgewandten Seite einer Funktionsfläche fort ragen. Eine Funktionsfläche erlaubt die Anordnung von Haftmitteln auf dem Profil. Durch zwei Schenkel ist das Profil klammerartig ausgestaltet, um eine oder mehrere Falten zwischen sich aufzunehmen. Die Schenkel sind elastisch deformierbar.

US 5 730 770 A betrifft einen zweistufigen Filter für elektronische Geräte. Der Filter weist ein feines Filtermedium und eine grobes Filtermedium auf. Das feine Filtermedium ist in einem Gehäuse angeordnet. Das grobe Filtermedium kann lösbar an dem Gehäuse mit dem feinen Filtermedium befestigt sein. Hierzu können Klettstreifen mit selbstklebender Rückseite auf das Gehäuse aufgeklebt sein.

US 2013/298773 A1 beschreibt einen Staubsammelfilter mit einem gefalteten Filtermedium für eine Bildprojektionsanzeigevorrichtung. Das gefaltete Filtermedium dieses Staubsammelfilters kann in einen Filterrahmen eingebettet sein. Ein Vorfilterelement kann an der Lufteintrittsseite des Staubsammelfilters vorgesehen sein. Das Vorfilterelement kann dabei am Filterrahmen gehalten sein, indem es zwischen lufteinlassseitige Enden des Filterrahmens gepresst ist.

### Offenbarung der Erfindung

Eine Aufgabe der Erfindung ist es, ein Filterelement zum Filtern eines Fluids mit einem Vorabscheider zu schaffen, das modular aufgebaut und auf einfache und kostengünstige Weise fertigbar ist.

Eine weitere Aufgabe ist es, ein Filtersystem zum Filtern eines Fluids zur Aufnahme eines solchen austauschbaren Filterelements mit einem Vorabscheider zu schaffen, das modular aufgebaut und auf einfache und kostengünstige Weise fertigbar ist.

Die vorgenannte Aufgabe wird gelöst von einem Filterelement nach Anspruch 1, das wenigstens einen Filterbalg und wenigstens einen Vorabscheider umfasst, wobei der Filterbalg mit Kunststoff in Form eines Rahmens umspritzt ist, und wobei der Vorabscheider mit an dem Rahmen angeordneten Befestigungselementen befestigt ist.

Günstige Ausgestaltungen und Vorteile der Erfindung ergeben sich aus den weiteren Ansprüchen, der Beschreibung und der Zeichnung.

Die Erfindung betrifft ein Filterelement zum Filtern eines Fluids, insbesondere zur Verwendung als Luftfilter einer Brennkraftmaschine oder als Innenraumluftfilter, insbesondere eines Kraftfahrzeugs, das wenigstens einen Filterbalg mit einer bestimmungsgemäßen Rohseite und einer dieser gegenüberliegenden bestimmungsgemäßen Reinseite umfasst, aus einem Filtermedium, das entlang von Faltkanten zickzackförmig zu Falten gefaltet ist, die sich jeweils zwischen gegenüberliegenden Stirnkanten des Filterbalgs erstrecken, und das jeweils auf gegenüberliegenden Stirnseiten parallel zueinander verlaufende Stirnkantenflächen aufweist. Weiter umfasst das Filterelement wenigstens einen Vorabscheider, der als ebene Matte ausgebildet und auf der Rohseite des Filterbalgs angeordnet ist. Dabei ist der Filterbalg mit Kunststoff in Form eines Rahmens umspritzt, so dass die Stirnkantenflächen abgedichtet sind. Weiter ist der Vorabscheider mit an dem Rahmen angeordneten Befestigungselementen befestigt. Rohseite und Reinseite des Filterbalgs können beispielsweise flächig ausgeführt sein, so dass der Filterbalg in Form einer ebenen Platte ausgeführt ist.

Es werden ein oder mehrere Filterbälge in einer Spritzgießform mit einem Kunststoff umspritzt, so dass der wenigstens eine Filterbalg in einer Art Rahmen fest fixiert und gehalten wird. Der Rahmen dichtet dabei zweckmäßigerweise die Stirnkantenflächen des Filterbalgs ab, indem die Stirnkanten des Filterbalgs mit eingespritzt sind. Stirnflächen des Filterbalgs können mit eingespritzt sein. Alternativ können sie jedoch auch offen bleiben. Eine umlaufende Stirnseite des Rahmens ist günstigerweise mit einer Dichtung zum Abdichten des Filterelements beim Einsatz in einem Filtergehäuse versehen. An einer gegenüberliegenden Seite des Rahmens sind Befestigungselemente angeordnet, an denen ein Vorabscheider, beispielsweise in Form einer Vliesmatte, angebracht werden kann. Seitenflächen des Rahmens können zur Versteifung bei großflächigen Filterelementen Versteifungsrippen aufweisen. Quer über die Fläche des Rahmens können auch Stege zur zusätzlichen Versteifung angeordnet sein. Werden mehrere Filterbälge nebeneinander angeordnet und eingespritzt, so sind zweckmäßigerweise zur Abdichtung der Stirnkantenflächen über die Länge des Rahmens parallel zu den Außenflächen der Stirnkantenabdichtungen der außenliegenden Filterbälge auch Stirnkantenabdichtungen im Inneren des Rahmens angeordnet und versteifen den Rahmen und das Filterelement so zusätzlich.

Die Umspritzung eines Filterbalgs mit Kunststoff weist mehrere Vorteile auf. Zum einen wird so ein stabiler Rahmen geschaffen, um den Filterbalg mechanisch zu halten, zu stabilisieren und für eine Montage handhabbar zu gestalten. Zum anderen werden damit die Stirnkantenflächen abgedichtet, so dass der Filterbalg damit für einen Einsatz in einem Filtersystem anwendbar ist.

Kunststoffumspritzte Filterelemente werden im Stand der Technik oft ohne Vorabscheider ausgeführt. Zur Verbesserung der Filtrationswerte und zum Schutz des eigentlichen Filtermediums vor groben Partikeln, Wasser und/oder Schnee wird bei herkömmlichen Cellulose-Filterelementen häufig ein Vorabscheider aufgebracht. Dieser Vorabscheider ist auch bei dem erfindungsgemäßen kunststoffumspritzten Filterelement aufgebracht. Dadurch ergeben sich ein verbesserter Schutz des Filtermediums sowie eine Verbesserung der Filtration bei kunststoffumspritzten Filterelementen, indem das eigentliche Filtermedium des Filterbalgs nicht mit groben Schmutzpartikeln belastet und/oder zugesetzt wird.

Die Befestigungselemente sind mit dem Rahmen einstückig ausgebildet. Die Befestigungselemente können einstückig mit dem Rahmen hergestellt werden, indem sie beim Spritzgießprozess gleich mit vorgesehen und gefertigt werden. So können die Befestigungselemente in einem Arbeitsgang und mit dem gleichen Material wie der Rahmen angefertigt werden, wodurch sich die Fertigungskosten des Filterelements günstig gestalten lassen.

Erfindungsgemäß sind die Befestigungselemente als Teil eines Klettverschlusses, insbesondere als Klettverschlusshaken, ausgebildet. Solche Befestigungselemente lassen sich in einer Spritzgießform darstellen, so dass sie in einem Spritzgießprozess mit dem Rahmen zusammen hergestellt werden können. Nach dem derzeitigen Stand der Technik werden Vorabscheider oft mittels Kleberraupen, Raupen aus Schmelzklebern oder ähnlichem auf einem Filterelement fixiert. Bei dem erfindungsgemäßen kunststoffumspritzten Filterelement kann an einer Stirnseite des Rahmens eine Klettverschlussstruktur eingearbeitet werden, die zur Befestigung des Vorabscheiders, beispielsweise in Form von Vliesen, Aktivkohlemedien oder ähnlichen Medien, dient. Die Klettverschlussstruktur kann direkt in einem Schritt beim Spritzgießen des Kunststoffteils hergestellt werden. Es sind keine zusätzlichen Arbeitsschritte, Prozessschritte und keine zusätzlichen Materialien wie Kleber nötig. Der Vorabscheider, beispielsweise in Form eines Vlieses, kann in der Fertigung automatisch auf das Filterelement/den Kunststoffrahmen aufgelegt werden. Durch die Klettverschlussstruktur ist eine sehr gute Haftung gewährleistet. Vorteile, die sich aus einer solchen Fertigung der Befestigungselemente ergeben, sind beispielsweise Kostenvorteile, Qualitätsvorteile, Prozesszeitenminimierung. Vorteilhaft kann der Rahmen so eine Seitenabdichtung der Stirnkantenflächen bewirken. Die Seitenflächen des Rahmens werden zweckmäßigerweise als Stirnkantenabdichtungen eingesetzt, indem die Stirnkanten des Filterbalgs mit dem Kunststoff umspritzt werden und so in die Seitenflächen des Rahmens eingebettet sind. Damit ist eine Abdichtung der Stirnkantenflächen erreicht. Bei mehreren Filterbälgen, nebeneinander liegend angeordnet, können die Stirnkantenabdichtungen als innenliegende Abdichtungsflächen des Rahmens parallel zu den äußeren Seitenflächen des Rahmens angeordnet sein.

Gemäß einer weiteren vorteilhaften Ausgestaltung kann der Vorabscheider zum gemeinsamen Austausch mit dem Filterelement vorgesehen sein. Wird der Vorabscheider mit dem Filterelement in Gestalt seines Rahmens über die Befestigungselemente verbunden, so kann er auch mit dem gesamten Filterelement getauscht werden. Der Vorabscheider braucht dann nicht separat gehandhabt werden. Alternativ ist jedoch auch möglich, den Vorabscheider nach Entnahme des Filterelements von diesem abzunehmen, zu reinigen und mit demselben Filterelement oder mit einem anderen Filterelement wieder einzusetzen. So ist zwar eine gemeinsame Handhabung mit dem Filterelement zusammen möglich und zweckmäßig, jedoch ist es durchaus auch möglich, den Vorabscheider separat weiterzuverwerten, insbesondere, wenn er über einen Klettverschluss an dem Rahmen befestigt ist.

Gemäß einer weiteren vorteilhaften Ausgestaltung kann als Vorabscheider ein Aktivkohlemedium vorgesehen sein. Auch Aktivkohlemedien liegen als flexible Matte vor, die an einer Klettverschlussstruktur, welche an dem Rahmen des Filterelements angebracht ist, günstig zu befestigen und handzuhaben ist. Damit kann auch ein Aktivkohlemedium zusammen mit dem Filterelement getauscht werden und braucht keine separate Halterung in einem Filtersystem.

Gemäß einer weiteren vorteilhaften Ausgestaltung kann der Rahmen aus demselben Material wie das Filtermedium bestehen. Statt Cellulose kann ein vollsynthetisches Material wie beispielsweise Polyester als Filtermedium eingesetzt werden. In dem Fall ist es auch möglich, den Rahmen aus demselben Material zu spritzgießen. Damit ergibt sich eine bessere Verbindung von Rahmen und Filterbalg/Filtermedium, da das gleiche Material in dem Fall eine feste stoffschlüssige Verbindung wie beispielsweise eine Schweißverbindung eingeht.

Gemäß einer weiteren vorteilhaften Ausgestaltung kann an einer Stirnseite des Rahmens eine umlaufende Dichtung vorgesehen sein. Eine solche Abdichtung des Filterelements beim Einsatz in einem Filtergehäuse ist zweckmäßig, um eine zuverlässige Trennung von Rohseite und Reinseite eines Filtersystems zu gewährleisten, wie es für einen zuverlässigen Filterprozess über eine entsprechende Standzeit des Filtersystems vorteilhaft ist.

Gemäß einer weiteren vorteilhaften Ausgestaltung kann in dem Rahmen quer zu den Falten wenigstens ein Versteifungssteg vorgesehen sein. Bei größeren flächigen Filterelementen ist aus Gründen der Verwindungssteifigkeit der Einsatz von Versteifungsstegen vorteilhaft, um auch eine zuverlässige Abdichtung über die Standzeit des Filterelements zu gewährleisten. Ein solcher Versteifungssteg kann zusätzlich zu den Seitenflächen des Rahmens im Spritzgießwerkzeug vorgesehen sein. Es ist jedoch auch möglich, beim Einsatz von mehreren Filterbälgen, die nebeneinander angeordnet in dem Rahmen eingespritzt sind, die innere Abdichtung der Stirnkantenflächen als Versteifungssteg auszuführen, so dass eine entsprechende Stabilität des Filterelements damit erreicht wird.

Die Erfindung betrifft weiterhin ein Filtersystem zum Filtern eines Fluids mit einem erfindungsgemäßen Filterelement wie oben beschrieben. Dabei ist das Filterelement austauschbar in einem Filtergehäuse des Filtersystems angeordnet und sieht einen Filterbalg und einen Vorabscheider zum gemeinsamen Austausch vor. Der Filterbalg ist mit Kunststoff in Form eines Rahmens umspritzt, so dass die Stirnkantenflächen abgedichtet sind. Der Vorabscheider ist mit an dem Rahmen angeordneten Befestigungselementen an dem Rahmen befestigt.

Es werden ein oder mehrere Filterbälge in einer Spritzgießform mit einem Kunststoff umspritzt, so dass der wenigstens eine Filterbalg in einer Art Rahmen fest fixiert und gehalten wird. Der Rahmen dichtet dabei zweckmäßigerweise die Stirnkantenflächen des Filterbalgs ab, indem die Stirnkanten des Filterbalgs mit eingespritzt sind. Stirnflächen des Filterbalgs können mit eingespritzt sein. Alternativ können sie jedoch auch offen bleiben. Eine umlaufende Stirnseite des Rahmens ist günstigerweise mit einer Dichtung zum Abdichten des Filterelements beim Einsatz in einem Filtergehäuse versehen. An einer gegenüberliegenden Seite des Rahmens sind Befestigungselemente angeordnet, an denen ein Vorabscheider, beispielsweise in Form einer Vliesmatte, angebracht werden kann. Seitenflächen des Rahmens können zur Versteifung bei großflächigen Filterelementen Versteifungsrippen aufweisen. Quer über die Fläche des Rahmens können auch Stege zur zusätzlichen Versteifung angeordnet sein. Werden mehrere Filterbälge nebeneinander angeordnet und eingespritzt, so sind zweckmäßigerweise zur Abdichtung der Stirnkantenflächen über die Länge des Rahmens parallel zu den Außenflächen der Stirnkantenabdichtungen der außenliegenden Filterbälge auch Stirnkantenabdichtungen im Inneren des Rahmens angeordnet und versteifen den Rahmen und das Filterelement so zusätzlich.

Die Befestigungselemente sind mit dem Rahmen einstückig ausgebildet. Die Befestigungselemente können einstückig mit dem Rahmen hergestellt werden, indem sie beim Spritzgießprozess gleich mit vorgesehen und gefertigt werden. So können die Befestigungselemente in einem Arbeitsgang und mit dem gleichen Material wie der Rahmen angefertigt werden, wodurch sich die Fertigungskosten des Filterelements günstig gestalten lassen.

Erfindungsgemäß sind die Befestigungselemente als Teil eines Klettverschlusses, insbesondere als Klettverschlusshaken, ausgebildet. Auch solche Befestigungselemente lassen sich in einer Spritzgießform darstellen, so dass sie in einem Spritzgießprozess mit dem Rahmen zusammen hergestellt werden können. Nach dem derzeitigen Stand der Technik werden Vorabscheider oft mittels Kleberraupen, Raupen aus Schmelzklebern, oder ähnlichem auf einem Filterelement fixiert. Bei dem kunststoffumspritzten Filterelement kann an einer Stirnseite des Rahmens eine Klettverschlussstruktur eingearbeitet werden, die zur Befestigung des Vorabscheiders, beispielsweise in Form von Vliesen, Aktivkohlemedien oder ähnlichen Medien, dient. Die Klettverschlussstruktur kann direkt in einem Schritt beim Spritzgießen des Kunststoffteils hergestellt werden. Es sind keine zusätzlichen Arbeitsschritte, Prozessschritte und keine zusätzlichen Materialien wie Kleber nötig. Der Vorabscheider, beispielsweise in Form eines Vlieses, kann in der Fertigung automatisch auf das Filterelement/den Kunststoffrahmen aufgelegt werden. Durch die Klettverschlussstruktur ist eine sehr gute Haftung gewährleistet. Vorteile, die sich aus einer solchen Fertigung der Befestigungselemente ergeben, sind beispielsweise Kostenvorteile, Qualitätsvorteile, Prozesszeitenminimierung

Das beschriebene, erfindungsgemäße Filtersystem kann erfindungsgemäß als Luftfilter einer Brennkraftmaschine oder als Innenraumluftfilter eines Kraftfahrzeugs eingesetzt werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Es zeigen beispielhaft:
- Fig. 1: eine isometrische Darstellung eines Filterelements ohne Vorabscheider mit in einem Rahmen umspritzten Filterbälgen nach einem Ausführungsbeispiel der Erfindung;
- Fig. 2: eine isometrische Darstellung des Rahmens ohne Filterbälge nach dem Ausführungsbeispiel in Figur 1;
- Fig. 3: eine isometrische Darstellung eines Vorabscheiders nach einem Ausführungsbeispiel der Erfindung in Form einer flächigen Matte;
- Fig. 4: eine Seitenansicht eines Filterelements mit Vorabscheider nach einem Ausführungsbeispiel der Erfindung;
- Fig. 5: eine vergrößerte Seitenansicht des Filterelements aus Figur 4 mit Detaillierung der Befestigungselemente in Form von Klettverschlusshaken mit angebrachtem Vorabscheider;
- Fig. 6: eine vergrößerte Seitenansicht des Filterelements aus Figur 4 mit Detaillierung der Befestigungselemente in Form von Klettverschlusshaken ohne Vorabscheider;
- Fig. 7: eine Draufsicht auf die Befestigungselemente in Form von Klettverschlusshaken nach einem Ausführungsbeispiel der Erfindung; und
- Fig. 8: eine schematische Schnittdarstellung eines Filtersystems nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

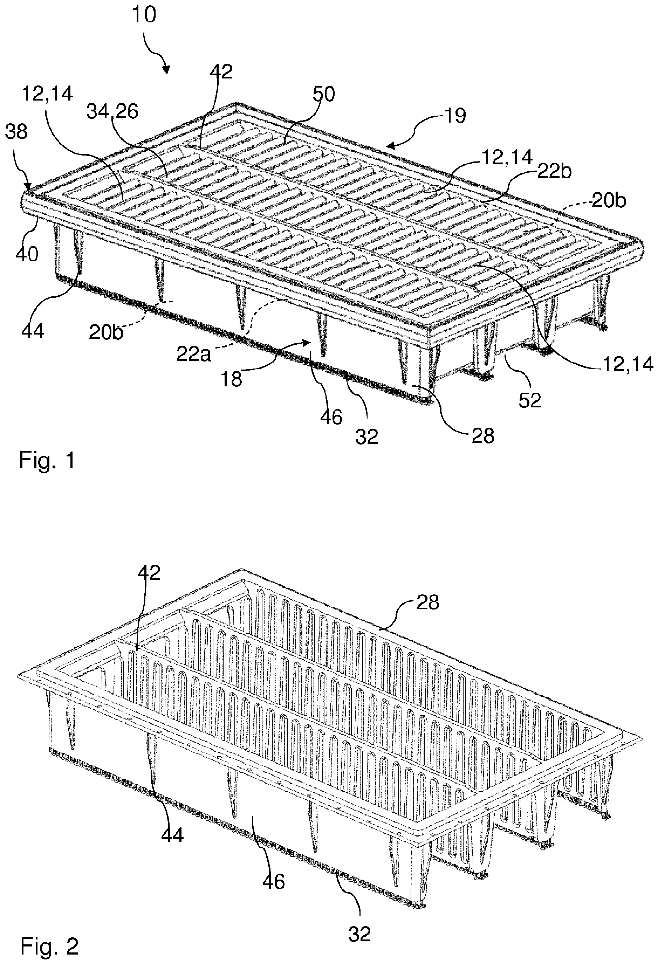

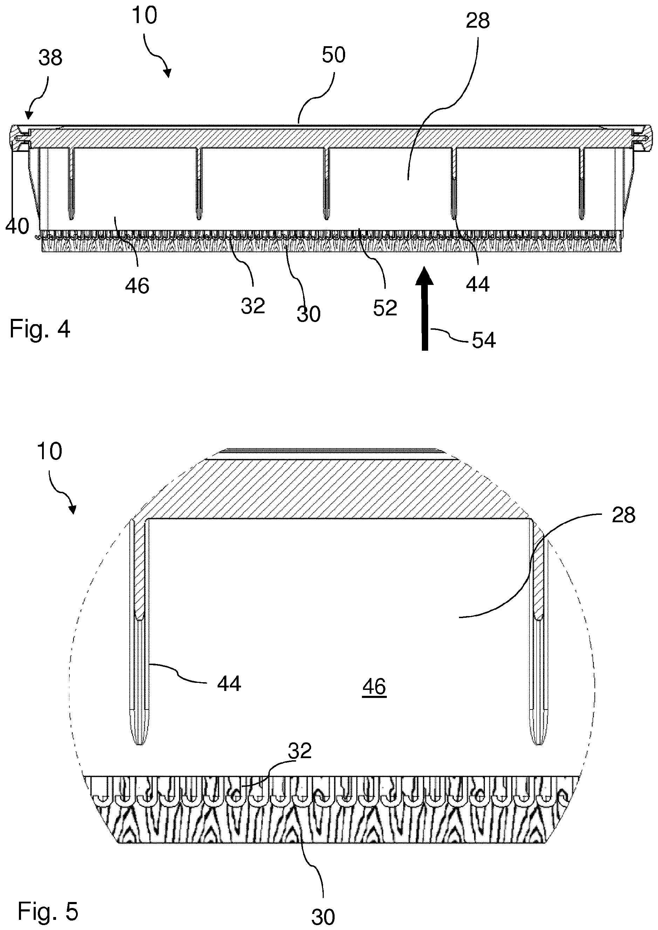

Figur 1 zeigt eine isometrische Darstellung eines Filterelements 10 ohne montierten Vorabscheider (30 in Figur 4) mit in einem Rahmen 28 umspritzten Filterbälgen 12 nach einem Ausführungsbeispiel der Erfindung. Das Filterelement 10 zum Filtern eines Fluids umfasst in Figur 1 einen Filterbalg 12 (alternativ: drei Filterbälge) mit einer bestimmungsgemäßen Rohseite 52 und einer dieser gegenüberliegenden bestimmungsgemäßen Reinseite 50, aus einem Filtermedium 14, das entlang von Faltkanten 26 zickzackförmig zu Falten 34 gefaltet ist, die sich jeweils zwischen gegenüberliegenden Stirnkanten 22a, 22b des Filterbalgs 12 erstrecken, und das jeweils auf gegenüberliegenden Stirnseiten 18, 19 parallel zueinander verlaufende Stirnkantenflächen 20a, 20b aufweist. Der Filterbalg 12 ist mit Kunststoff in Form eines Rahmens 28 umspritzt, so dass die Stirnkantenflächen 20a, 20b abgedichtet sind. Der Vorabscheider (30 in Figur 4) kann mit an dem Rahmen 28 angeordneten Befestigungselementen 32 befestigt werden, ist jedoch in Figur 1 nicht dargestellt. Der Rahmen 28 bewirkt eine Seitenabdichtung der Stirnkantenflächen 20a, 20b. In dem Rahmen 28 sind quer zu den Falten 34 Versteifungsstege 42 vorgesehen, welche zugleich als Abdichtungen der Stirnkantenflächen 20a, 20b der einzelnen Filterbälge 12 dienen. Der Rahmen 28 kann günstigerweise aus demselben Material wie das Filtermedium 14 bestehen, um so eine stoffschlüssige Verbindung zwischen Rahmen 28 und Filterbalg 12, wie in Form einer Schweißung, zu erreichen.

Die Befestigungselemente 32 sind mit dem Rahmen 28 einstückig ausgebildet, also zweckmäßig zusammen mit dem Rahmen 28 in einem Spritzgießprozess hergestellt worden. Die Befestigungselemente 32 können auch nur partiell ausgebildet sein. Sie sitzen insbesondere an der Unterseite der Seitenflächen 46 und Versteifungsstege 42 des Rahmens 28, die gleichzeitig die Abdichtung der Stirnkantenflächen 20a, 20b der Filterbälge 12 bilden.

An der Stirnseite 38 des Rahmens 28 ist eine umlaufende Dichtung 40 vorgesehen, welche zur Trennung der Rohseite 52 von der Reinseite 50 beim Einsatz in einem Filtergehäuse 108 dient. Die Dichtung 40 kann in einem Zweikomponentenprozess an den Rahmen 28 angespritzt werden. Sie kann jedoch auch als Formdichtung hergestellt und nach Herstellung des Rahmens 28 auf diesen aufgepresst werden.

In Figur 2 ist eine isometrische Darstellung des Rahmens 28 ohne Filterbälge 12 nach dem Ausführungsbeispiel in Figur 1 dargestellt. Der Rahmen 28 ist als Gerippe für die Filterbälge 12 zu sehen. In den Seitenflächen 46 und Versteifungsstegen 42 sind die Negativabdrücke der Stirnkanten 22a, 22b der Filterbälge 12 zu erkennen, da diese mit dem Kunststoff umspritzt sind und so eine Seitenabdichtung der Filterbälge 12 erreicht wird. Die Seitenflächen 46 weisen Versteifungsrippen 44 zur Versteifung des gesamten Rahmens 28 auf. An der Unterseite der Seitenflächen 46 und Versteifungsstege 42 sind die Befestigungselemente 32 für die Anbringung des Vorabscheiders 30 angeordnet.

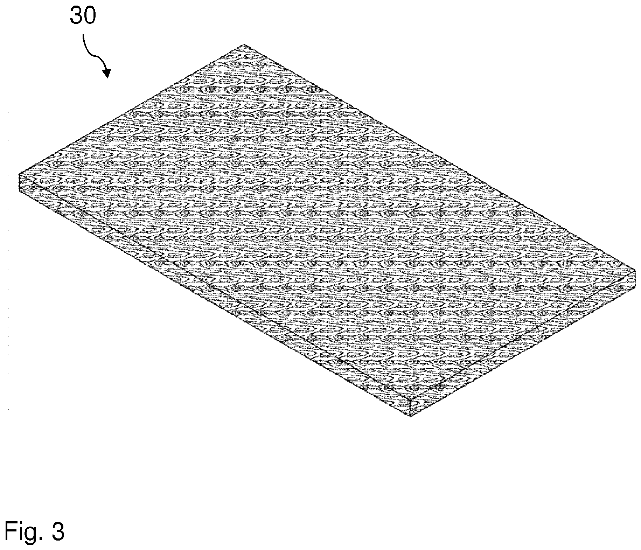

Figur 3 zeigt eine isometrische Darstellung eines Vorabscheiders 30 nach einem Ausführungsbeispiel der Erfindung in Form einer flächigen Matte. Das erfindungsgemäße Filterelement 10 in Figur 1 umfasst einen solchen Vorabscheider 30, der als ebene Matte ausgebildet und auf der Rohseite 52 des Filterbalgs 12 angeordnet ist. Der Vorabscheider 30 ist zum gemeinsamen Austausch mit dem Filterelement 10 vorgesehen. Der Vorabscheider 30 kann nach Entnahme des Filterelements 10 aus einem Filtergehäuse 108 von dem Rahmen 28 abgenommen werden, um gereinigt oder mit einem anderen Filterelement 10 wieder verwendet zu werden. Das Filterelement 10 kann auch mit einem neuen Vorabscheider 30 versehen werden, um so weiter eingesetzt zu werden. Als Vorabscheider 30 kann auch ein Aktivkohlemedium vorgesehen sein.

In Figur 4 ist eine Seitenansicht eines Filterelements 10 mit Vorabscheider 30 nach einem Ausführungsbeispiel der Erfindung zu sehen. Der Vorabscheider 30 ist an den Befestigungselementen 32, welche an der Unterseite der Seitenflächen 46 und Versteifungsstege (42 in Figur 1), die der Rohseite 52 des Filterelements 10 entspricht, angeordnet sind, angebracht. Die Durchströmungsrichtung 54 des Filterelements 10 ist mit einem Pfeil dargestellt.

An einer umlaufenden Stirnseite 38 des Rahmens 28 ist die Dichtung 40 angeordnet, welche für eine Abdichtung zwischen Rohseite 52 und Reinseite 50 beim Einsatz in einem Filtergehäuse 108 dient.

Figur 5 zeigt eine vergrößerte Seitenansicht des Filterelements 10 aus Figur 4 mit Detaillierung der Befestigungselemente 32 in Form von Klettverschlusshaken mit angebrachtem Vorabscheider 30. Die Befestigungselemente 32 sind als Teil eines Klettverschlusses, insbesondere als Klettverschlusshaken, ausgebildet. Der Vorabscheider 30, der beispielsweise als Vlies ausgebildet ist, kann so als Gegenstück eines Klettverschlusses in diese Klettverschlusshaken eingehakt werden, was für den Betrieb des Filterelements 10 eine zuverlässige und dauerhafte Verbindung zwischen Rahmen 28 (Figur 4) und Vorabscheider 30 gewährleistet. Dennoch kann der Vorabscheider 30 bei einem Austausch des Filterelements 10 auch wieder abgenommen und ausgetauscht werden.

In Figur 5 sind auch Versteifungsrippen 44, welche der Versteifung der Seitenflächen 46 des Rahmens 28 dienen, deutlich zu erkennen.

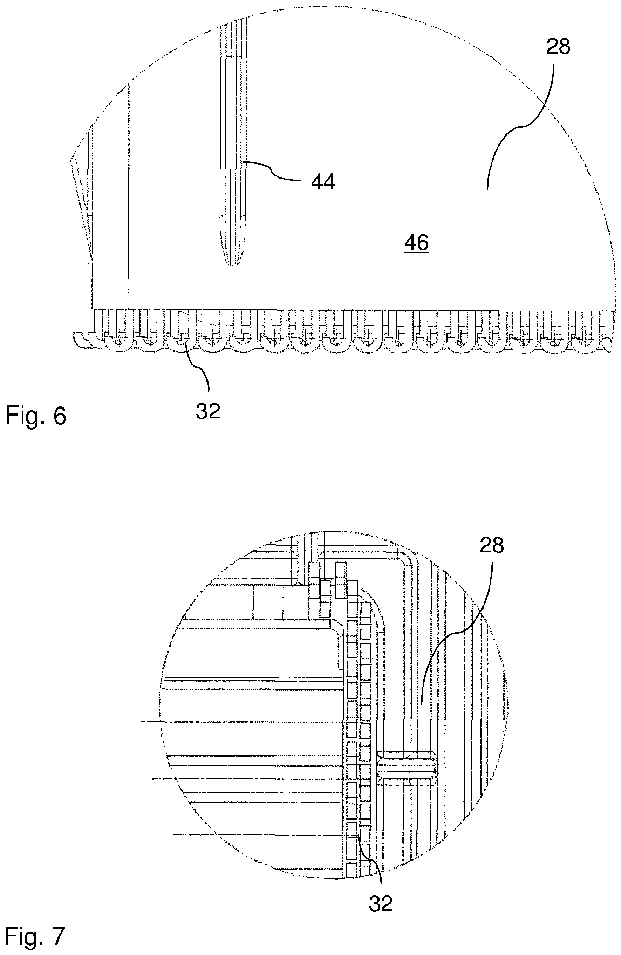

In Figur 6 ist eine vergrößerte Seitenansicht des Filterelements 10 aus Figur 4 mit Detaillierung der Befestigungselemente 32 in Form von Klettverschlusshaken ohne Vorabscheider 30 dargestellt. In dieser Detaillierung ist die Form der Klettverschlusshaken, welche in einem Spritzgießprozess zusammen mit dem Rahmen 28 als einstückiges Bauteil hergestellt werden können, deutlich zu erkennen. Eine solche Form lässt sich in einer Spritzgießform darstellen. Das fertige Bauteil kann bei einer solchen Form auch nach dem Spritzgießen entformt werden. Alternativ können die Befestigungselemente 32 auch eine Pilzform aufweisen.

Figur 7 zeigt eine Draufsicht auf die Befestigungselemente 32 in Form von Klettverschlusshaken nach einem Ausführungsbeispiel der Erfindung. Bei dem in Figur 7 dargestellten Ausführungsbeispiel ist eine zweireihige Anordnung der Klettverschlusshaken als ausreichend für eine dauerhafte Befestigung des Vorabscheiders 30 gewählt.

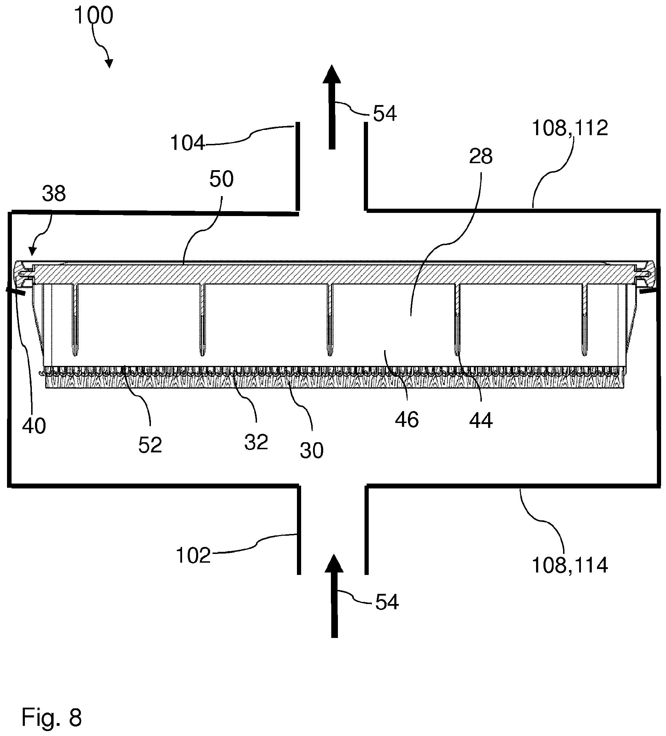

Figur 8 zeigt eine schematische Schnittdarstellung eines Filtersystems 100 nach einem Ausführungsbeispiel der Erfindung. Das Filtersystem 100 zum Filtern eines Fluids mit einem Filterelement 10 umfasst ein in einem Filtergehäuse 108 des Filtersystems angeordnetes austauschbares Filterelement 10. Das Filterelement 10 sieht einen Filterbalg 12 und einen Vorabscheider 30 zum gemeinsamen Austausch vor. Der Filterbalg 12 ist mit Kunststoff in Form eines Rahmens 28 umspritzt, so dass die Stirnkantenflächen 20a, 20b abgedichtet sind. Der Vorabscheider 30 ist mit an dem Rahmen 28 angeordneten Befestigungselementen 32 befestigt. Die Befestigungselemente 32 sind mit dem Rahmen 28 einstückig ausgebildet. Die Befestigungselemente 32 sind dabei als Teil eines Klettverschlusses, insbesondere als Klettverschlusshaken, ausgebildet. Das Filtersystem 100 dient beispielsweise zur Luftfilterung, insbesondere zur Luftfilterung einer Brennkraftmaschine oder als Innenraumfilter eines Fahrzeugs.

Das Filtergehäuse 108 mit Gehäuseunterteil 114 und Gehäuseoberteil 112 ist rein schematisch mit einem Einlass 102 für das Fluid und einem Auslass 104 für das Fluid dargestellt. Die Durchströmungsrichtung 54 des Fluids ist mit einem Pfeil gekennzeichnet. Das Filterelement 10 im Inneren des Filtergehäuses 108 ist in Seitenansicht dargestellt und wird mit der Dichtung 40 an der Stirnseite 38 des Rahmens 28 umlaufend gegen das Filtergehäuse 108 abgedichtet, so dass Rohseite 52 und Reinseite 50 zuverlässig getrennt sind. Der Vorabscheider ist stromauf vor der Rohseite 52 des in dem Rahmen 28 umspritzten Filterbalgs 12 angeordnet, um eine Vorabscheidung grober Schmutzpartikel des Fluids zu bewirken.

## Patentansprüche

1. Filterelement (10) zum Filtern eines Fluids, umfassend
- wenigstens einen Filterbalg (12) mit einer bestimmungsgemäßen Rohseite (52) und einer dieser gegenüberliegenden bestimmungsgemäßen Reinseite (50), aus einem Filtermedium (14), das entlang von Faltkanten (26) zickzackförmig zu Falten (34) gefaltet ist, die sich jeweils zwischen gegenüberliegenden Stirnkanten (22a, 22b) des Filterbalgs (12) erstrecken, und das jeweils auf gegenüberliegenden Stirnseiten (18, 19) parallel zueinander verlaufende Stirnkantenflächen (20a, 20b) aufweist,
- wenigstens einen Vorabscheider (30), der als ebene Matte ausgebildet und auf der Rohseite (52) des Filterbalgs (12) angeordnet ist,
wobei der Filterbalg (12) mit Kunststoff in Form eines Rahmens (28) umspritzt ist, so dass die Stirnkantenflächen (20a, 20b) abgedichtet sind, und wobei der Vorabscheider (30) mit an dem Rahmen (28) angeordneten Befestigungselementen (32) befestigt ist, wobei die Befestigungselemente (32) mit dem Rahmen (28) einstückig ausgebildet sind,
**dadurch gekennzeichnet,**
**dass** die Befestigungselemente (32) als Teil eines Klettverschlusses ausgebildet sind.

2. Filterelement nach Anspruch 1, wobei der Rahmen (28) eine Seitenabdichtung der Stirnkantenflächen (20a, 20b) bewirkt.

3. Filterelement nach einem der vorhergehenden Ansprüche, wobei die Befestigungselemente (32) als Klettverschlusshaken ausgebildet sind.

4. Filterelement nach einem der vorhergehenden Ansprüche, wobei der Vorabscheider (30) zum gemeinsamen Austausch mit dem Filterelement vorgesehen ist.

5. Filterelement nach einem der vorhergehenden Ansprüche, wobei als Vorabscheider (30) ein Aktivkohlemedium vorgesehen ist.

6. Filterelement nach einem der vorhergehenden Ansprüche, wobei der Rahmen (28) aus dem gleichen Material wie das Filtermedium (14) besteht.

7. Filterelement nach einem der vorhergehenden Ansprüche, wobei an einer Stirnseite (38) des Rahmens (28) eine umlaufende Dichtung (40) vorgesehen ist.

8. Filterelement nach einem der vorhergehenden Ansprüche, wobei in dem Rahmen (28) quer zu den Falten (34) wenigstens ein Versteifungssteg (42) vorgesehen ist.

9. Filtersystem (100) zum Filtern eines Fluids mit einem Filterelement (10) nach einem der vorhergehenden Ansprüche, wobei das Filterelement (10) austauschbar in einem Filtergehäuse (108) des Filtersystems angeordnet ist und welches Filterelement (10) einen Filterbalg (12) und einen Vorabscheider (30) zum gemeinsamen Austausch vorsieht, wobei der Filterbalg (12) mit Kunststoff in Form eines Rahmens (28) umspritzt ist, so dass die Stirnkantenflächen (20a, 20b) abgedichtet sind, und wobei der Vorabscheider (30) mit an dem Rahmen (28) angeordneten Befestigungselementen (32) befestigt ist.

10. Filtersystem nach Anspruch 9, wobei die Befestigungselemente (32) als Klettverschlusshaken ausgebildet sind.

11. Verwendung des Filtersystems (100) nach Anspruch 9 oder 10 zur Luftfilterung für eine Brennkraftmaschine oder als Innenraumfilter eines Fahrzeugs.

## Claims

1. Filter element (10) for filtering a fluid, comprising
- at least one filter bellows (12) with an intended raw side (52) and oppositely positioned to it an intended clean side (50), made of a filter medium (14) that is zigzag-folded along fold edges (26) to form folds (34) which extend each between opposing front edges (22a, 22b) of the filter bellows (12), and that features on opposing front sides (18, 19) front edge surfaces (20a, 20b) running parallel to each other,
- at least one pre-separator (30) realized as plane mat and disposed on the raw side (52) of the filter bellows (12),
wherein the filter bellows (12) is overmolded with plastics material in the shape of a frame (28) so that the front edge surfaces (20a, 20b) are sealed, and wherein the pre-separator (30) is attached using fasteners (32) disposed on the frame (28), wherein the fasteners (32) are realized in one piece with the frame (28),
**characterized in**
**that** the fasteners (32) are realized as part of a velcro-type fastener.

2. Filter element according to claim 1, wherein the frame (28) achieves a lateral sealing of the front edge surfaces (20a, 20b).

3. Filter element according to one of the preceding claims, wherein the fasteners (32) are realized as velcro-type fastener hooks.

4. Filter element according to one of the preceding claims, wherein the pre-separator (30) is provided for a common replacement with the filter element.

5. Filter element according to one of the preceding claims, wherein an activated carbon medium is provided as pre-separator (30).

6. Filter element according to one of the preceding claims, wherein the frame (28) is made of the same material as the filter medium (14).

7. Filter element according to one of the preceding claims, wherein a circumferential seal (40) is provided at a front face (38) of the frame (28).

8. Filter element according to one of the preceding claims, wherein at least one stiffening web (42) is provided transversely to the folds (34) in the frame (28).

9. Filter system (100) for filtering a fluid with a filter element (10) according to one of the preceding claims, wherein the filter element (10) is replaceably disposed in a filter housing (108) of the filter system and which filter element (10) provides a filter bellows (12) and a pre-separator (30) for a common replacement, wherein the filter bellows (12) is overmolded with plastics material in the shape of a frame (28) so that the front edge surfaces (20a, 20b) are sealed, and wherein the pre-separator (30) is attached using fasteners (32) disposed on the frame (28).

10. Filter system according to claim 9, wherein the fasteners (32) are realized as velcro-type fastener hooks.

11. Use of the filter system (100) according to claim 9 or 10 for filtering air of an internal combustion engine or as cabin air filter of a vehicle.

## Revendications

1. Élément filtrant (10) destiné à filtrer un fluide, comprenant
- au moins un soufflet de filtre (12) avec un côté brut conforme à l'utilisation (52) et un côté pur conforme à l'utilisation (50) opposé au côté brut, constitué d'un milieu filtrant (14) plié le long d'arêtes de pliage (26) en plis (34) en zigzag qui s'étendent entre des arêtes frontales (22a, 22b) respectivement opposées du soufflet de filtre (12) et présentant sur les faces frontales (18, 19) respectivement opposées des surfaces d'arêtes frontales (20a, 20b) s'étendant parallèlement les unes aux autres,
- au moins un pré-séparateur (30) qui est conçu en tant que natte plane et disposé sur le côté brut (52) du soufflet de filtre (12),
dans lequel le soufflet de filtre (12) est enrobé de matière plastique sous la forme d'un cadre (28) de sorte que les surfaces d'arêtes frontales (20a, 20b) sont étanchées, et dans lequel le pré-séparateur (10) est attaché au moyen d'éléments de fixation (32) disposés sur le cadre (28), dans lequel les éléments de fixation (32) sont conçus d'un seul tenant avec le cadre (28),
**caractérisé en ce que** les éléments de fixation (32) sont conçus pour faire partie d'une fermeture Velcro.

2. Élément filtrant selon la revendication 1, dans lequel le cadre (28) réalise une étanchéité latérale des surfaces d'arêtes frontales (20a, 20b).

3. Élément filtrant selon l'une des revendications précédentes, dans lequel les éléments de fixation (32) sont conçus en tant que crochets de fermeture Velcro.

4. Élément filtrant selon l'une des revendications précédentes, dans lequel le pré-séparateur (30) est prévu à l'échange commun avec l'élément filtrant.

5. Élément filtrant selon l'une des revendications précédentes, dans lequel un milieu de charbon actif est prévu comme pré-séparateur (30).

6. Élément filtrant selon l'une des revendications précédentes, dans lequel le cadre (28) est fait du même matériau que le milieu filtrant (14).

7. Élément filtrant selon l'une des revendications précédentes, dans lequel un joint d'étanchéité circonférentiel (40) est prévu sur la face frontale (38) du cadre (28).

8. Elément filtrant selon l'une des revendications précédentes, dans lequel au moins une nervure de renforcement (42) est prévue dans le cadre (28) transversalement aux plis (34).

9. Système de filtre (100) destiné à filtrer un fluide avec un élément filtrant (10) selon l'une des revendications précédentes, dans lequel l'élément filtrant (10) est disposé dans un boîtier de filtre (108) du système de filtre de manière échangeable, et lequel élément filtrant (10) est pourvu d'un soufflet de filtre (12) et d'un pré-séparateur (30) pour un échange commun, dans lequel le soufflet de filtre (12) est enrobé de matière plastique sous la forme d'un cadre (28) de sorte que les surfaces d'arêtes frontales (20a, 20b) sont étanchées, et dans lequel le pré-séparateur (30) est attaché au moyen d'éléments de fixation (32) disposés sur le cadre (28).

10. Système de filtre selon la revendication 9, dans lequel les éléments de fixation (32) sont conçus en tant que crochets de fermeture Velcro.

11. Utilisation du système de filtre (100) selon la revendication 9 ou 10 pour la filtration d'air pour un moteur à combustion interne ou en tant que filtre d'habitacle d'un véhicule.
